# EUROPÄISCHE PATENTSCHRIFT

(11) **EP 1 854 614 B1**
(45) Veröffentlichungstag und Bekanntmachung des Hinweises auf die Patenterteilung: **07.04.2010**
(21) Anmeldenummer: 07008920.6
(22) Anmeldetag: 03.05.2007
(51) Int. Cl.: B29C 51/06, B29K 101/12

(54) **Formwerkzeug zum Tiefziehen eines Behälters aus einer erwärmten thermoplastischen Kunststofffolie**
Moulding tool for deep drawing a container made of a heated thermoplastic film
Outil d'emboutissage d'un récipient en feuilles de matière synthétique thermoplastiques chauffées

(30) Priorität: 04.05.2006 DE 102006020673
(43) Veröffentlichungstag der Anmeldung: 14.11.2007
(73) Patentinhaber: ILLIG Maschinenbau GmbH & Co. KG, 74081 Heilbronn (DE)
(72) Erfinder: Müller, Thomas, 74193 Schwaigern (DE); Eisele, Klaus, 72160 Horb (DE)

(56) Entgegenhaltungen:
- EP-A1- 0 079 682
- EP-A1- 1 541 318
- WO-A-02/072335
- CA-A1- 1 150 469
- DE-A1- 19 706 797
- JP-A- 2 147 317
- JP-A- 2002 104 365
- US-A- 2 973 558
- US-A- 3 568 254
- US-A- 5 198 175

## Beschreibung

Die Erfindung betrifft ein Formwerkzeug zum Tiefziehen eines Behälters aus einer erwärmten thermoplastischen Kunststofffolie.

Aus der Druckschrift DE 7 001 963 ist ein Verfahren zum Herstellen von dünnwandigen Behältern aus einer thermoplastischen Kunststofffolie bekannt, welches Insbesondere für die Produktion tiefer Behälter mit steiler Seitenwand vorgesehen ist. Durch das Verschieben des Unterteils des Formwerkzeugs in Richtung der Kunststofffolie wird die zuvor erwärmte Kunststofffolie zwischen jeweiligen Dichträndern des Ober- und Unterteils des Formwerkzeugs eingespannt. Der Streckhelfer wird in Richtung auf die Kunststofffolie verschoben und streckt die Kunststofffolie mechanisch vor. Während seiner Verschiebung wird in das Unterteil Druckluft so zugeführt, dass sich ein ringförmiges Luftpolster zwischen Behälterformteilen und der Kunststofffolie ausbildet, welches eine Berührung der Form durch die Kunststofffolie verhindern und so eine gleichmäßige Ausdehnung der Kunststofffolie ermöglichen sollt. Das Ausformen und Ausstanzen der Behälter erfolgt in an sich bekannter Weise. Dieses Verfahren ist zum Herstellen von Behältern mit steiler Seitenwand vorgesehen. Bedingt durch die Schwierigkeit, ein solches Luftpolster zwischen den Behälterformteilen und dem gekühlten Niederhalter und der ihn umgebenden Führungshülse auszubalancieren, kann es dabei zum Kontakt der Kunststofffolie mit dem Niederhalter oder der Führungshülse kommen, wodurch örtlich Wärme von der Kunststofffolie zum Niederhalter oder zur Führungshülse übertragen wird, was zur Ungleichmäßigkeit in der Ausformung bezüglich der Wandstärke der Behälter führt. Außerdem kann die Oberfläche an der Berührungsstelle beschädigt werden.

Aus der Druckschrift DE 600 04 734 T2 sind ein Verfahren zum Herstellen eines Behälters mit Hinterschnitt aus thermoplastischer Kunststofffolie und ein Formwerkzeug bekannt, bei dem zum Entformen des fertigen Behälters die beweglichen Elemente in horizontaler und vertikaler Richtung dergestalt geöffnet werden, dass die Behälter durch Ansaugen gegen ein Bodenelement des Formwerkzeugs zur Entnahme vertikal nach unten verschoben werden. Beim Schließen des Formwerkzeugs wird zunächst der Abschnitt der Kunststofffolie eingespannt, der den Behälterrand bildet. Das außerhalb befindliche Kunststoffmaterlal kann deshalb nicht zur Bildung des Behälters herangezogen werden. Der Behälterrand wird relativ dick oder bildet - bei starkem Anpressdruck -einen Wulst im Randbereich. Eine gleichmäßige Wandstärkenverteilung des Behälters ist schwierig oder überhaupt nicht zu erreichen.

Die Druckschrift US 3,510,913 zeigt ein Verfahren, bei dem tiefe Behälter geformt werden, indem die Kunststofffolie bei der mechanischen Vorformung durch Differenzdruck gegen den Streckhelfer gedrückt wird. An den anliegenden Stellen reckt sich die Kunststofffolie jedoch nur noch wenig, sodass Behälter mit dickem Bodenbereich und dünnem Randbereich entstehen. Eine gleichmäßige Wandstärke der Behälter ist nicht zu erreichen. Beim Ausstanzen der Behälter in der Formstation wird der Behälterrand zusammengestaucht und dabei deformiert.

Die Druckschrift DE 1 276 898 zeigt ein Verfahren und eine Vorrichtung zum Herstellen von Behältern aus thermoplastischer Kunststofffolie, bei dem die Kunststofffolie zwischen Klemmbacken gespannt und zunächst bei geöffnetem Formwerkzeug durch den Streckhelfer mechanisch vorgestreckt wird. Während der Bewegung des Streckhelfers wird das Unterteil des Formwerkzeugs in Richtung auf die Folienebene verschoben. Die beiden Werkzeughälften schließen sich und der Behälter wird durch Druckluft ausgeformt, durch das Zusammenwirken der als Schnittstempel ausgebildeten Formteile mit einer Matrize am Oberteil des Formwerkzeugs aus der Folie ausgetrennt und durch Auswerfer entformt. Behälter mit Hinterschnitt lassen sich mit diesem Formwerkzeug nicht herstellen.

Die Druckschrift EP 0 079 682 zeigt ein Verfahren und eine Vorrichtung zum Herstellen von Behältern aus thermoplastischer Kunststofffolie, bei dem die Kunststofffolie zwischen Klemmbacken gespannt und nach einer pneumatischen Vorstreckung durch den Streckhelfer mechanisch in die Gegenrichtung vorgestreckt wird. Danach erfolgt die pneumatische Formung in die Anlage an das Formwerkzeug.

Dabei wird Folie aus dem Raum zwischen dem Innenrand der Klemmbacken und dem Außenrand der formbildenden Teile des Formwerkzeugs gezogen. Dies geschieht unkontrolliert und ergibt in Abhängigkeit von schwankenden Thermoformparametern wie z.B. der Durchwärmung der Kunststofffolie Schwankungen in der Materialstärke.

Die Druckschrift CA 1 150 469 zeigt ein Verfahren zum Herstellen von Behältern aus thermoplastischer Kunststofffolie, bei dem die Kunststofffolie zwischen Klemmbacken gespannt und nach einer pneumatischen Vorstreckung durch den Streckhelfer mechanisch in die Gegenrichtung vorgestreckt wird. Danach erfolgt die pneumatische Formung in die Anlage an das Formwerkzeug. Dabei wird Folie aus dem Raum zwischen dem Innenrand der Klemmbacken und dem Außenrand der formbildenden Teile des Formwerkzeugs gezogen. Dies geschieht genauso wie in EP 0 079 682 unkontrolliert und ergibt in Abhängigkeit von schwankenden Thermoformparametern wie z.B. der Durchwärmung der Kunststofffolie Schwankungen in der Materialstärke.

Die Druckschrift JP 02147317 zeigt ein Verfahren zum Herstellen von Behältern aus thermoplastischer Kunststofffolie, bei dem die Kunststofffolie zwischen Klemmbacken gespannt und nach einer pneumatischen Vorstreckung durch den Streckhelfer mechanisch in die Gegenrichtung vorgestreckt wird. Danach erfolgt die pneumatische Formung in die Anlage an das Formwerkzeug. Dabei wird Folie aus dem Raum zwischen dem Innenrand der Klemmbacken und dem Außenrand der formbildenden Teile des Formwerkzeugs gezogen. Dies geschieht genauso wie in EP 0 079 682 unkontrolliert und ergibt in Abhängigkeit von schwankenden Thermoformparametern wie z.B. der Durchwärmung der Kunststofffolie Schwankungen in der Materialstärke.

Die Druckschrift US 5,198,175 zeigt ein Verfahren zum Herstellen von Behältern aus thermoplastischer Kunststofffolie, bei dem die Kunststofffolie zwischen Klemmbacken gespannt wird. Das Formwerkzeug ist dreistückig aufgebaut und umfasst ein oberes Formteil für die Randausformung, ein unteres Inneres Teil für die Ausformung des Wandabschnittes und ein unteres äußeres Teil, das als Gegenform für das obere Formteil zur Ausformung des Randes dient. Das Verfahren beginnt mit dem mechanischen Vorformen mittels des vertikal verschiebbaren Vorstreckers bei gleichzeitiger Anhebung des unteren Formwerkzeuges, wobei dieses auch zum mechanischen Vorformen eingesetzt wird. Die pneumatische Ausformung schließt sich an zu Endausformung. Zuletzt senkt sich das obere Formwerkzeug auf den oberen Randbereich des unteren inneren Formwerkzeugs zur Ausformung des Randabschnittes.

Die Druckschrift DE 197 06 797 zeigt ein Verfahren zum Herstellen von Behältern aus thermoplastischer Kunststofffolie, sowie eine Formstation und eine Verpackungsmaschine sowie einen Verpackungsbehälter, bei dem die Folie mittels Vorstrecker zunächst mechanisch vorgestreckt wird und anschließend pneumatisch ausgeformt. Den Abschluss des Formvorgangs bildet das horizontale Öffnen und Absenken der Formwerkzeughälften. Die gebildeten Verpackungsbehälter werden horizontal weiter befördert zu nachgelagerte Arbeitsstationen.

Die Druckschrift US 3,342,914 zeigt eine Vorrichtung zum Herstellen von Behältern aus thermoplastischer Kunststofffolie, bei dem die Kunststofffolie außerhalb des den Behälterrand bildenden Bereichs eingespannt und mit einem Streckhelfer mechanisch vorgeformt wird. Eine Vorwölbung entgegen der Tiefziehrichtung vor dem mechanischen Verstrecken ist nicht vorgesehen. Sie erfolgt erst, nachdem die Kunststofffolie am Streckhelfer anliegt, was aber eine freie Ausdehnung der Kunststofffolie verhindert. Eine gleichmäßige Wandstärkeverteilung ist so nicht zu erreichen.

Der Erfindung liegt die Aufgabe zugrunde, ein Formwerkzeug zum Tiefziehen eines Behälters aus einer erwärmten thermoplastischen Kunststofffolie so auszubilden, dass sowohl ein tiefer Behälter mit steiler Seitenwand als auch ein Behälter mit Hinterschnitt hergestellt werden kann und der Behälter eine gleichmäßige Wandstärke und sein Behälterrand eine gleichmäßige Dicke aufweist. Ebenfalls soll die Herstellung der Behälter materialsparend erfolgen.

Zur Lösung der Aufgabe werden die Merkmale des Hauptanspruches vorgeschlagen. Weiterbildungen sind in den Unteransprüchen beschrieben.

Das wesentliche Merkmal gegenüber bekannten Formwerkzeugen liegt in der Kombination einer Einspannung der Kunststofffolie außerhalb des den Behälterrand bildenden Bereichs, um auch Material von außerhalb der späteren Schnittlinie zu verstrecken, die eingespannte Folie zunächst entgegen der Tiefziehrichtung vorgewölbt wird, eines wechselnden Differenzdruckes während des Tiefziehens auf den eingespannten Abschnitt unter Zuhilfenahme eines Streckhelfers sowie im Einwirken eines Niederhalters auf den Behälterrand erst nach beendetem Tiefziehvorgang. Die Kombination dieser Merkmale erzeugt einen relativ tiefen und/oder einen Hinterschnitt aufweisenden Behälter mit gleichmäßiger Wandstärke und gleichmäßig dickern Behälterrand, der deutlich dünner ist als die Ausgangsdicke der Kunststofffolie und deshalb rasch abkühlt, was eine hohe Taktzahl ermöglicht. Durch die Vorwölbung entgegen der Tiefziehrichtung wird erreicht, dass in Verbindung mit dem Differenzdruck eine vorzeitige Berührung der Folie mit formgebenden Bauteilen des Formwerkzeugs verhindert wird und sich der eingespannte Abschnitt gleichmäßig dehnt, sodass ein stabiler Behälter mit unbeschädigter Oberfläche und - bedingt durch das am Ende des Verfahrens erfolgende Einspannen des Behälterrandes - gleichmäßig dickem Behälterrand entsteht. Dieser gleichmäßige Behälterrand ist für das nachfolgende Aufsiegeln eines Deckels wichtig.

Die Erfindung ist nachfolgend anhand der schematischen Zeichnungen näher beschrieben. Es zeigen:
- Fig. 1 bis 8: das Formwerkzeug In verschiedenen Phasen des Verfahrensablaufs
- Fig. 9: das Formwerkzeug in einer Ausbildung
- Fig. 10 bis 13: das Formwerkzeug In Varianten des Verfahrensablaufes

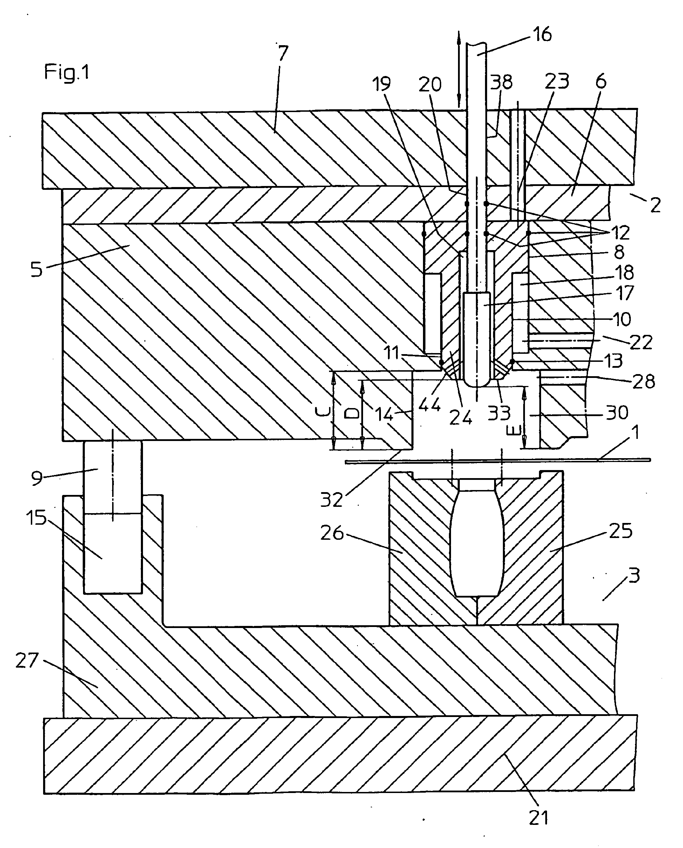

Das Formwerkzeug wird eingebaut In die Formstation eines Thermoformautomaten zur Verarbeitung einer thermoplastischen Kunststofffolie 1. Fig. 1 zeigt das Formwerkzeug in einer geöffneten Stellung in Ausgangslage. Es umfasst ein Oberteil 2, welches an einem Obertisch 7 der Formstation lösbar befestigt ist. Das Oberteil 2 umfasst eine Kopfplatte 6 und einen Kühlblock 5, in dem Bohrungen 18 entsprechend der Anzahl der Formnester des Formwerkzeugs angeordnet sind. Dabei können mehrere Formnester pro Reihe und mehrere Reihen an Formnestern im Formwerkzeug angeordnet sein. In jeder Bohrung 18 im Kühlblock 5 sitzt ein verschiebbarer Niederhalter 24 mit einem Absatz 8, der in einen im Durchmesser kleineren Absatz 10 übergeht. Dieser Absatz 10 ist in der Bohrung 11 des Kühlblocks 5 geführt. Die Unterkante 33 des Niederhalters 24 weist in Ausgangslage einen Abstand D zur Unterseite 32 des Kühlblocks 5 auf. Ebenfalls sind im unteren Teil des Niederhalters 24 Formluftbohrungen 44 angeordnet. Die Verschiebung des Niederhalters 24 erfolgt pneumatisch durch abwechselnde Druckluftzufuhr über die Bohrungen 22, 23. Zur Abdichtung dienen Dichtungen 12, 13. Die Bohrung 11 geht über in eine vergrößerte Bohrung 14 im Kühlblock 5, die einen Freiraum 30 mit der Höhe C im Kühlblock 5, bezogen auf dessen Unterseite 32, bildet. Dabei ist die Größe der Bohrung 14 so gewählt, dass ein Abstand A bis zum Behälterrand 31 besteht. Eine Bohrung 28 mündet in diesen Freiraum 30 und dient der Differenzdruckbildung durch Formluftzufuhr bzw. Anlegen von Vakuum. In Bohrung 38 im Obertisch 7 und Bohrung 20 in der Kopfplatte 6 ist eine Streckhelferstange 16 koaxial geführt, sie trägt einen Streckhelfer 17 und dieser findet Platz in einer Bohrung 19 im Niederhalter 24. Der Kühlblock 5 weist ferner mindestens zwei an ihm befestigte Bolzen 9 auf.
Erfindungsgemäß betragen der Abstand D und die Höhe des Freiraums C mindestens 10 mm, sodass ein entsprechender Raum zum Vorwölben des eingespannten Abschnitts der Kunststofffolie 1 gegeben ist.

Das Unterteil 3 umfasst einen am Untertisch 21 der Formstation angeordneten Rahmen 27 und Formteile 25, 26 zur Formgebung von Behältern 4, die aus der Kunststofffolie 1 tiefgezogen werden. Die Formteile 25, 26 sitzen auf dem Rahmen 27. Je nach Gestalt der Behälter 4 können die Formteile 25, 26 horizontal zueinander verschoben werden, um Behälter 4 mit Hinterschnitt - wie dargestellt - oder tiefe Behälter entformen zu können. Im Rahmen 27 sitzen Bohrungen 15, die mit den Bolzen 9 zusammen die Führung von Oberteil 2 zum Unterteil 3 übernehmen. Die Anordnung von Bolzen 9 und Bohrung 15 ist natürlich auch spiegelbildlich ausführbar und die Führung ist durch andere bekannte Elemente erreichbar. Ebenso kann auch auf die Führung verzichtet werden, wenn keine besonderen Anforderungen an die Gestaltung des Randes des Behälters 4 gestellt werden.

Die in den Figuren 1 bis 9 dargestellten Ausführungsformen des Formwerkzeugs können in Einzelheiten variiert werden.

So ist es möglich, den Niederhalter 24 verschiebbar über einen separaten Antrieb zum Oberteil 2 auszubilde oder einseitig über Federn zu beaufschlagen, die dann eine Bewegung in eine Richtung ausführen.

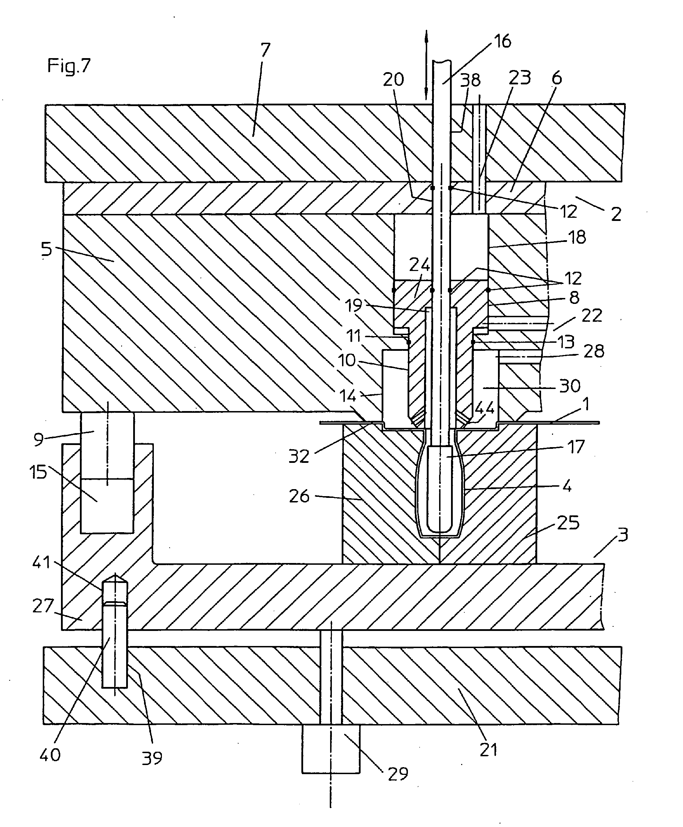

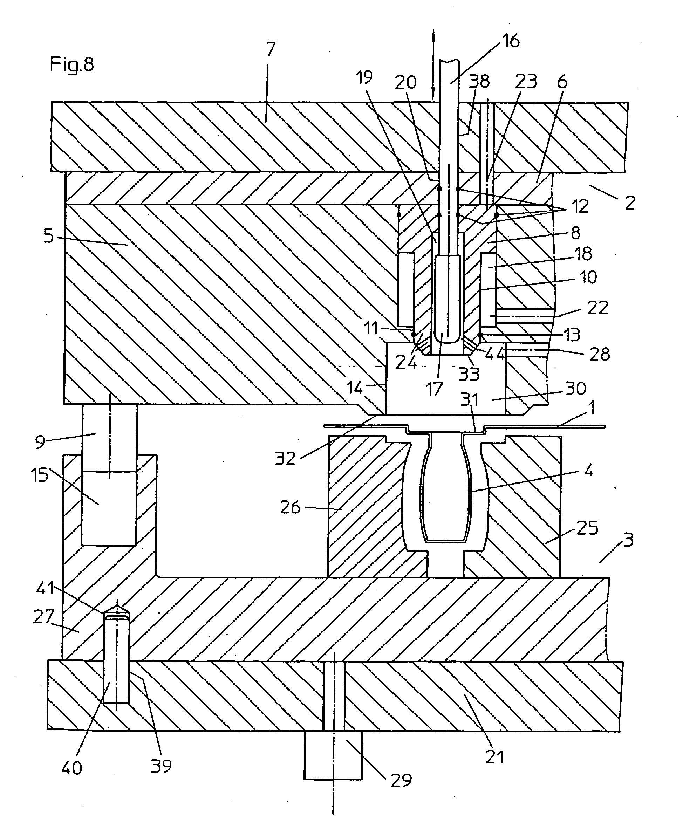

Ferner kann bei starrem Untertisch 21 ein Antrieb 29 - siehe Figuren 7 und 8 - zwischen Untertisch 21 und Rahmen 27 vorgesehen sein, der eine Höhenverschiebung des Rahmens 27 vornimmt. Dieser Antrieb 29 kann beispielsweise von einer Membran oder einem anderen geeigneten Element zur Erzeugung eines Kurzhubes dargestellt werden.

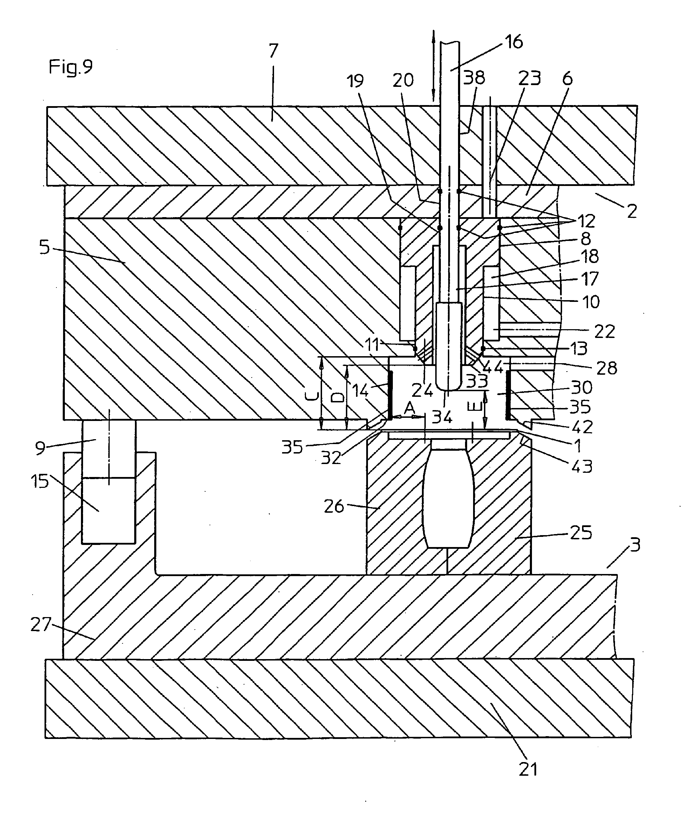

Des weiteren können die Formteile 25 und 26 horizontal verschiebbar ausgebildet sein und können durch am Rahmen 27 angeordnete, nicht dargestellte, verriegelbare Führungen nach dem Formen voneinander distanziert werden. Der beim Formprozess entstehende Formdruck wird an der Unterseite der Formteile 25 und 26 durch die verriegelbaren Führungen und an der Oberseite - wie in Figur 9 dargestellt - durch untere Schrägen 43, die an den Formteilen 25 und 26 angeordnet sind und die mit oberen Schrägen 42, welche am Kühlblock 5 angeordnet sind, zusammenwirken, aufgenommen.

Das Verfahren zum Herstellen eines Behälters 4 aus einer erwärmten thermoplastischen Kunststofffolie 1 durch Tiefziehen wird anhand der Figuren 1 bis 8 näher beschrieben und erfolgt in den folgenden Schritten:

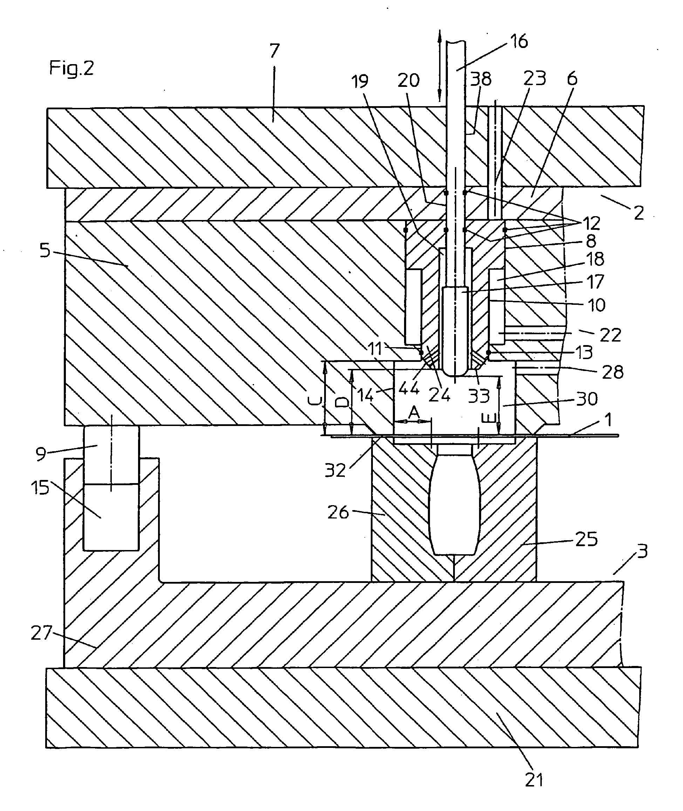

Fig. 1 stellt die Ausgangslage - geöffneter Zustand des Formwerkzeugs - dar. Ein Abschnitt der erwärmten Kunststofffolie 1 wird zwischen dem Oberteil 2 und dem Unterteil 3 angeordnet. Zunächst wird der Untertisch 21 angehoben, bis ein Abschnitt der Kunststofffolie 1 zwischen der Unterseite 32 des Kühlblocks 5 und der Oberseite der Formteile 25, 26 eingespannt ist (Lage Figur 2). Diese Stellung kann je nach Ausführung der Formstation durch Höhenverschiebung des Unterteils 3, des Oberteils 2 oder von beiden erreicht werden. Auch eine Verschiebung des Rahmens 27 allein durch einen Antrieb 29 relativ zum Untertisch 21 führt zu dieser Stellung, wie es in den Figuren 7 und 8 dargestellt ist.

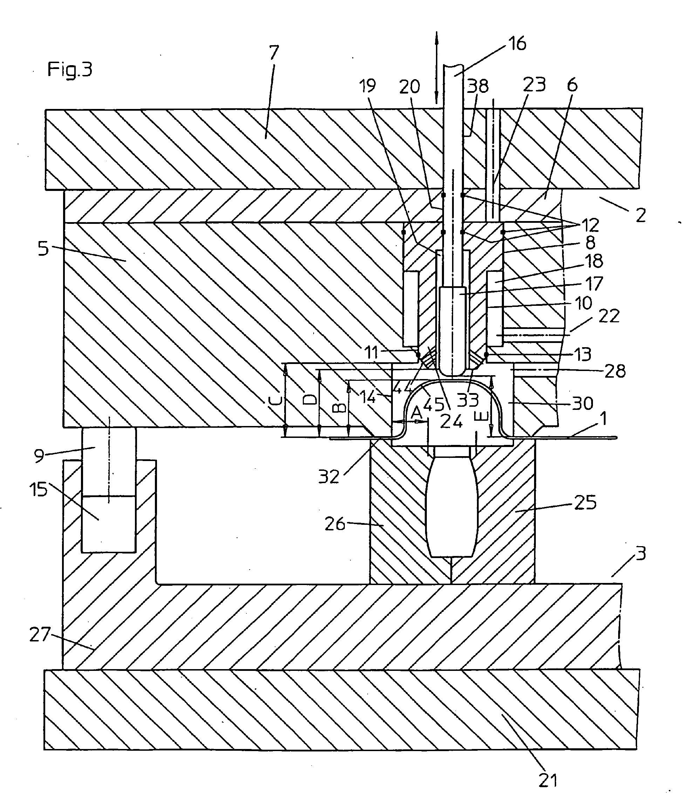

Es folgt das pneumatische Vorformen des eingespannten Abschnittes der Kunststofffolie 1 in Richtung des Streckhelfers 17 (Fig.3) durch das Anlegen einer Druckdifferenz zwischen den beiden Seiten der Kunststofffolie 1. Dies kann entweder dadurch erfolgen, dass Vakuum im Freiraum 30 über die Bohrung 28 im Kühlblock 5 erzeugt wird und/oder durch Druckluftzufuhr ins Innere der Formteile 25, 26 über nicht dargestellte Bohrungen. Dadurch verformt sich der eingespannte Abschnitt um das Maß B nach oben in Richtung des Streckhelfers 17, wobei das Maß D stets größer als das Maß B ist und die Vorwölbung (45) ausgebildet wird.

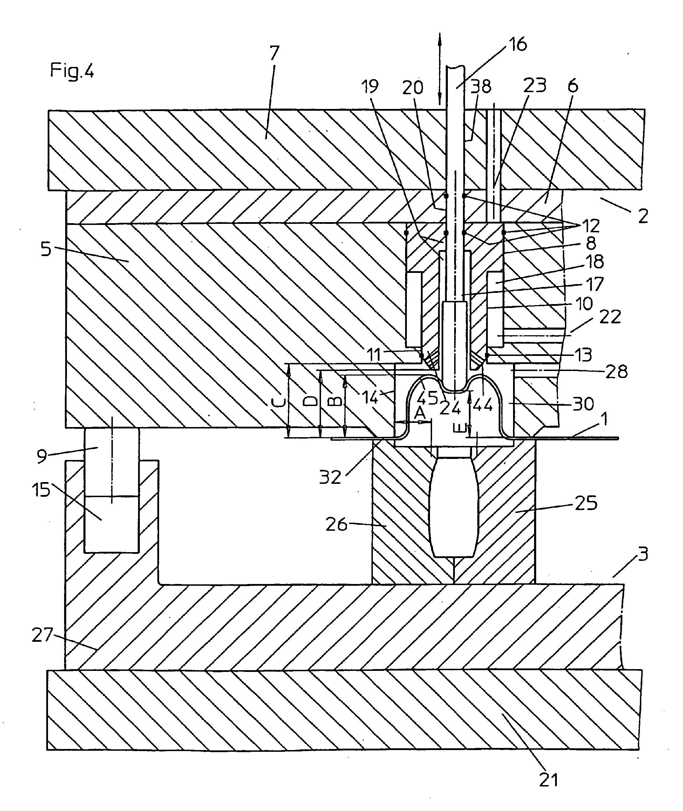

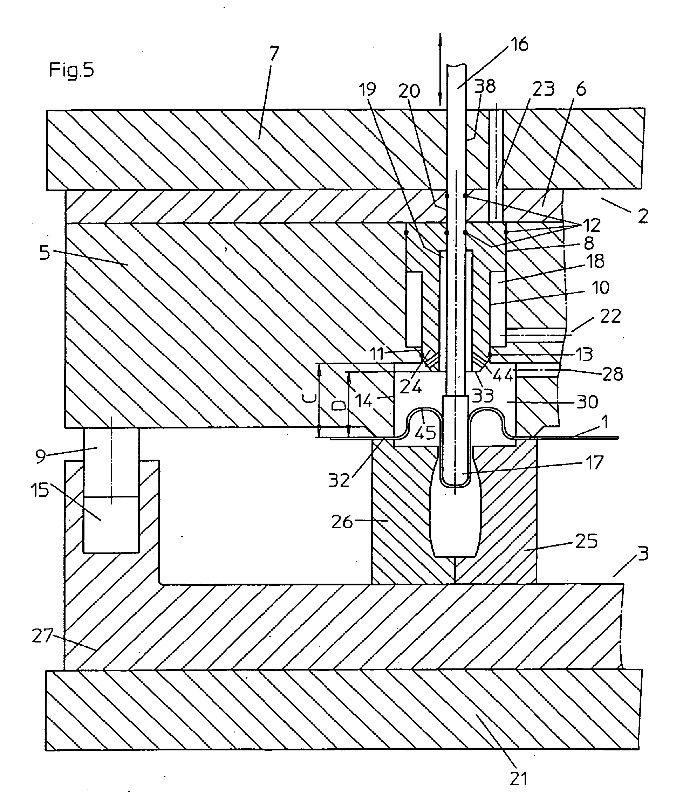

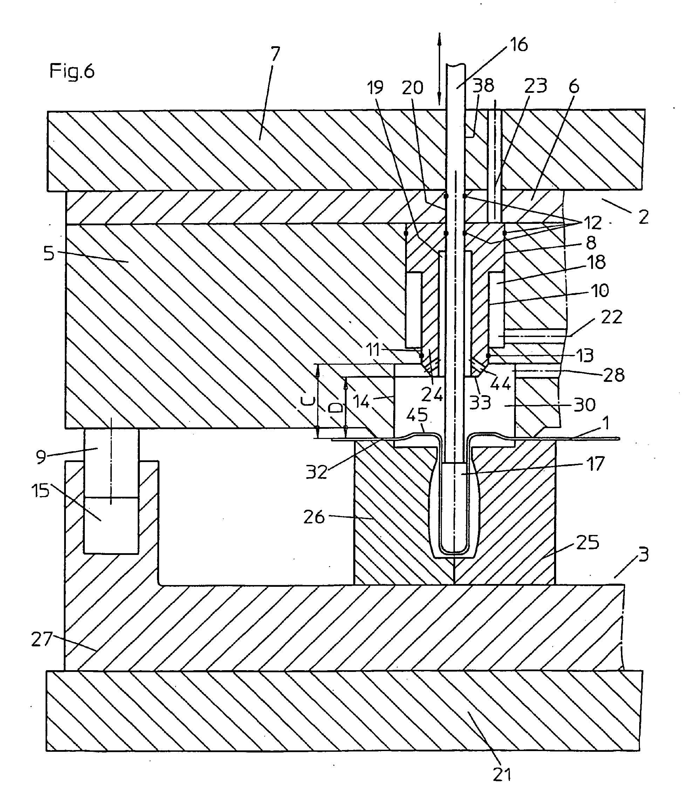

Es schließt sich die mechanische Verformung des eingespannten Abschnitts durch den Streckhelfer 17 an (Figuren 4 und 5), der in Richtung auf den gewölbten Abschnitt verschoben wird, wobei die Druckdifferenz weiterhin ansteht. Durch die anstehende Druckdifferenz wird der Kontakt der Folie mit den Formteilen 25, 26 unterbunden. Fig. 6 zeigt das Ende der mechanischen Verformung durch den Streckhelfer 17, wobei die Druckdifferenz bis zum Ende der mechanischen Verformung oder bis kurz vor diesem Ende ansteht.

In einer Ausprägung des Verfahrens steht die Druckdifferenz nur bis zum Beginn der mechanischen Verformung an.

Danach folgt die endgültige pneumatische Ausformung der zuvor bereits pneumatisch und mechanisch verformten Kunststofffolie 1 zur Form des Behälters 4 an die Innenseite der Formteile 25, 26 durch Druckluftzufuhr über die Bohrung 28 und das Absenken des Niederhalters 24 (Figur 7). Die pneumatische Ausformung ist ebenso durch Anlegen eines Vakuums in den Formteilen 25, 26 sowie durch das gleichzeitige Anlegen von Vakuum und Überdruck realisierbar. Durch dieses Absenken und Pressen des Niederhalters 24 mit seiner Unterkante 33 auf den Behälterrand des Behälters 4 erfolgt dessen Kalibrierung, wobei der Behälterrand eine plane - wie dargestellt - schräge oder gewölbte Gestalt aufweisen kann.

In einer Ausprägung des Verfahrens wird die Verformung auch ohne den Einsatz eines Niederhalters durchgeführt.

Der letzte Schritt des Formprozesses ist das Öffnen des Formwerkzeugs zum Entnehmen des Behälters 4, der mit der Kunststofffolie 1 verbunden bleibt und erst in einer nachfolgenden Station ausgetrennt wird. Falls der Behälter 4 eine - wie dargestellt - hinterschnittene Kontur aufweist, erfolgt das Öffnen nur um einen geringen Weg, es schließt sich das Auseinanderfahren der beiden Formteile 25, 26 an, sodass der Behälter 4 mit der Kunststofffolie 1 senkrecht zur Öffnungsrichtung der Formteile 25, 26 abtransportiert werden kann (Figur 8).

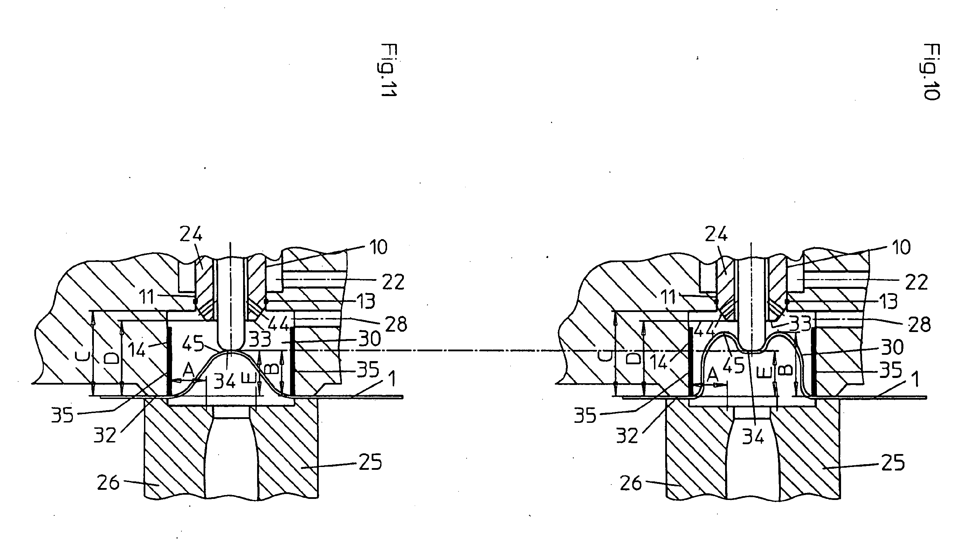

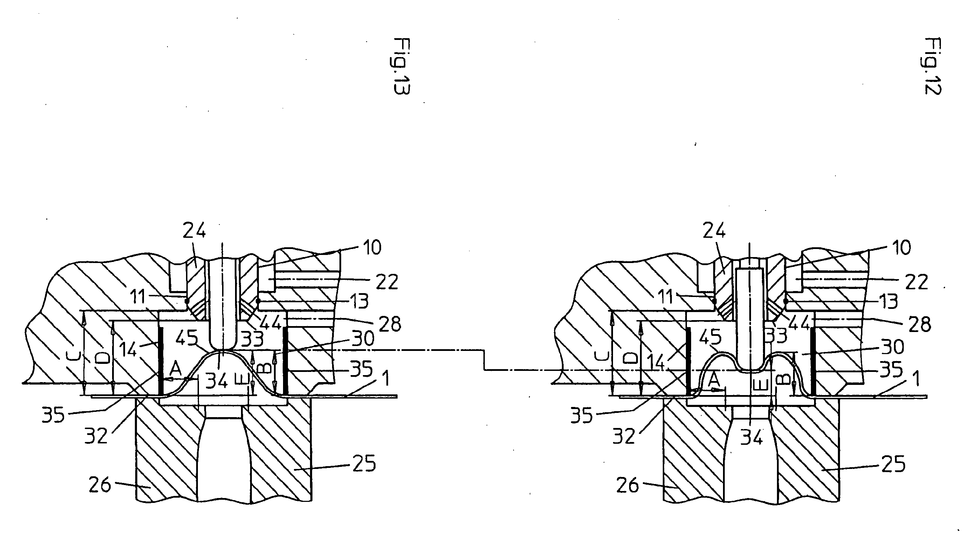

In den Figuren 10 bis 13 ist eine Variante des Verfahrens dargestellt. Voraussetzung dabei ist, dass der Streckhelfer 17 in Ausgangslage (Fig. 11) über die Unterkante 33 des Niederhalters 24 vorsteht und mit seiner Unterkante ein Maß E bis zur Unterseite 32 des Kühlblocks 5 bildet, das kleiner ist als das Maß D, wobei das Maß E auch den Wert Null annehmen kann. Das Vorwölben des eingespannten Abschnittes der Kunststofffolie 1 erfolgt zunächst bis zur Anlage an die Unterseite 34 des Streckhelfers 17 (Fig. 11) und dann darüber hinaus bis zu einem Maß B, das größer ist als das Maß E (Fig. 10). Anschließend erfolgt das Absenken des Streckhelfers 17 und es folgen die Verfahrensabläufe, die in den Figuren 5 bis 8 dargestellt sind. Vorteile bietet diese Variante des Verfahrens, wenn ein stärkerer Behälterboden erzielt werden soll. Durch das frühere Anliegen des den Behälterboden bildenden Bereichs der Kunststofffolie am Streckhelfer 17 wird dessen Dehnung reduziert und als Folge ein dickerer Behälterboden erreicht. Durch Variation der Maße E und B (Fig. 12, 13) kann der Behälterboden auf die gewünschte Dicke gebracht werden. Dazu ist es vorteilhaft, die untere Lage des Streckhelfers 17 einstellbar zu gestalten, z.B. indem der Streckhelfer 17 über einen Servomotor angetrieben wird, dessen Endstellungen einfach programmiert werden können.

Gemäß einer besonderen Ausbildung des Verfahrens wird vorgeschlagen, die Vorwölbung des eingespannten Abschnitts der Kunststofffolie 1 um ein Maß B von mindestens 10 mm vorzunehmen, bevor der Streckhelfer 17 seine Vorstreckung beginnt.

Eine weitere vorteilhafte Ausbildung des Formwerkzeugs ist in der Figur 9 dargestellt in der Form, dass der Innenbereich des Freiraums 30 mit einer Isolation 35 zu versehen, um jegliche Abschreckung der vorgewölbten Kunststofffolie 1 zu vermeiden, sollte diese mit der Wand des Freiraums 30 in Berührung kommen.

Die Behälter, die mit dem Formwerkzeug erzeugt werden können, weisen vorzugsweise einen kreisförmigen horizontalen Querschnitt auf. Dieser kann aber ebenso quadratisch sein, Abrundungen aufweisen oder andere bekannte geometrische Formen wie oval oder rechteckig.
Dementsprechend weisen die Formteile 25, 26 eine entsprechend angepasste Innenkontur auf. Der horizontale Querschnitt des Freiraumes 30 kann ebenso an die Behälterkontur angepasst sein.

### Bezugszeichentabelle

| | | | |
|---|---|---|---|
| 1 | Kunststofffolie | 36 | Mittlerer Abschnitt |
| 2 | Oberteil | 37 | Äußerer Abschnitt |
| 3 | Unterteil | 38 | Bohrung |
| 4 | Behälter | 39 | Bohrung |
| 5 | Kühlblock | 40 | Führung |
| 6 | Kopfplatte | 41 | Bohrung |
| 7 | Obertisch | 42 | Schräge obere |
| 8 | Absatz | 43 | Schräge untere |
| 9 | Bolzen | 44 | Formluftbohrung |
| 10 | Absatz | 45 | Vorwölbung |
| 11 | Bohrung | | |
| 12 | Dichtung | | |
| 13 | Dichtung | | |
| 14 | Bohrung | | |
| 15 | Bohrung | A | Abstand Behälterrand - Bohrung im Kühlblock |
| 16 | Streckhelferstange | B | Höhe Vorwölbung |
| 17 | Streckhelfer | C | Höhe Freiraum im Kühlblock |
| 18 | Bohrung | D | Abstand Niederhalter-Unterseite Kühlblock |
| 19 | Bohrung | E | Abstand Streckhelfer-Unterseite Kühlblock |
| 20 | Bohrung | | |
| 21 | Untertisch | | |
| 22 | Bohrung | | |
| 23 | Bohrung | | |
| 24 | Niederhalter | | |
| 25 | Formteil | | |
| 26 | Formteil | | |
| 27 | Rahmen | | |
| 28 | Bohrung | | |
| 29 | Antrieb | | |
| 30 | Freiraum | | |
| 31 | Behälterrand | | |
| 32 | Unterseite | | |
| 33 | Unterkante | | |
| 34 | Unterseite | | |
| 35 | Isolation | | |

## Patentansprüche

1. Formwerkzeug zum Tiefziehen eines Behälters aus einer erwärmten thermoplastischen Kunststofffolie mit einem Oberteil, mit einem Kühlblock, einem Niederhalter und einem Streckhelfer sowie einem Unterteil mit Formteilen, **dadurch gekennzeichnet, dass** im Kühlblock (5) ein Freiraum (30) mit der Höhe (C) vorgesehen ist und dass die Unterkante (33) des Niederhalters (24) im eingefahrenen Zustand einen Abstand (D) von der Unterkante (32) des Kühlblocks (5) aufweist, der größer ist als der Abstand (E) zwischen der Unterkante (32) des Kühlblocks (5) und der Unterseite (34) des Streckhelfer (17).

2. Formwerkzeug nach Anspruch 1, **dadurch gekennzeichnet, dass** die Höhe des Maßes (C) stets die Höhe des Maßes (E) übersteigt.

3. Formwerkzeug nach einem der Ansprüche 1 oder 2, **dadurch gekennzeichnet, dass** die Wandung des Freiraums (30) mit einer Isolation (35) versehen ist.

4. Formwerkzeug nach einem der Ansprüche 1 bis 3, **dadurch gekennzeichnet, dass** die Unterseite des Kühlblocks (5) obere Schrägen (42) aufweist, die komplementär zu unteren Schrägen (43) an der Oberseite der Formteile (25, 26) angeordnet sind.

## Claims

1. Die for the deep drawing of a container from a heated thermoplastic plastic film with an upper part, with a cooling block, a blank holder and a drawing aid, as well as a lower part with preformed parts, **characterised in that** a free space (30) with the height (C) is provided in the cooling block (5) and **in that** the lower edge (33) of the blank holder (24) has a distance (D) from the lower edge (32) of the cooling block (5) in the run-in state which is greater than the distance (E) between the lower edge (32) of the cooling block (5) and the lower side (34) of the drawing aid (17).

2. Die according to Claim 1, **characterised in that** the size of the dimension (C) always exceeds the size of the dimension (E).

3. Die according to any one of the Claims 1 or 2, **characterised in that** the wall of the free space (30) is provided with insulation (35).

4. Die according to any one of Claims 1 to 3, **characterised in that** the underside of the cooling block (5) has upper bevels (42) which are arranged complementarily to lower bevels (43) on the upper side of the preformed parts (25, 26).

## Revendications

1. Outil de moulage pour l'emboutissage profond d'un récipient à base d'un film plastique thermoplastique réchauffé comprenant une partie supérieure, un bloc de refroidissement, un serre-flan et un dispositif d'aide à l'étirage ainsi qu'une partie inférieure avec des parties de moulage, **caractérisé en ce qu'**un espace libre (30) présentant la hauteur (C) est prévu dans le bloc de refroidissement (5) et **en ce que** l'arête inférieure (33) du serre-flan (24) présente, dans l'état rentré, une distance (D) à l'arête inférieure (32) du bloc de refroidissement (5) qui est supérieure à la distance (E) entre l'arête inférieure (32) du bloc de refroidissement (5) et le côté inférieur (34) du dispositif d'aide à l'étirage (17).

2. Outil de moulage selon la revendication 1, **caractérisé en ce que** la hauteur de la cote (C) dépasse toujours la hauteur de la cote (E).

3. Outil de moulage selon l'une quelconque des revendications 1 ou 2, **caractérisé en ce que** la paroi de l'espace libre (30) est dotée d'une isolation (35).

4. Outil de moulage selon l'une quelconque des revendications 1 à 3, **caractérisé en ce que** le côté inférieur du bloc de refroidissement (5) présente des chanfreins (42) supérieurs qui sont disposés de façon complémentaire à des chanfreins (43) inférieurs sur le côté supérieur des pièces de moulage (25, 26).
